# EUROPÄISCHE PATENTANMELDUNG

(11) **EP 0 636 843 A1**
(43) Veröffentlichungstag der Anmeldung: **01.02.1995**
(21) Anmeldenummer: 94111696.4
(22) Anmeldetag: 27.07.1994
(51) Int. Cl.: F24H 7/00, F16L 59/08, F16L 59/02

(54) **Wärmedämmung für Elektro-Speicherheizgeräte**

(30) Priorität: 29.07.1993 DE 4325495
(71) Anmelder: KKW Kulmbacher Klimageräte-Werk GmbH, D-95326 Kulmbach (DE)
(72) Erfinder: Kaim, Leo, D-96342 Stockheim (DE)
(74) Vertreter: Zenz, Joachim Klaus, Dipl.-Ing.

(57) **Zusammenfassung**

Die Wärmedämmung besteht aus mehreren dünnwandigen, faserfreien Reflektoren (11...14), die in der Richtung (3) des Wärmeflusses hintereinander angeordnet sind. Auf ihrer Heißseite sind die Reflektoren mit Reflexionsflächen (25) versehen, die die Wärme von Stufe zu Stufe zurückwerfen. Zwischen benachbarten Reflektoren sind Abstandselemente (21, 22, 23) angeordnet. Die Wärmedämmung beansprucht bei guten Wärmedämmeigenschaften nur ein geringes Bauvolumen. Ihre Umweltverträglichkeit ist im Vergleich zu bekannten faserhaltigen Wärmedämmungen ideal.

## Beschreibung

Die Erfindung betrifft eine Wärmedämmung für Elektro-Speicherheizgeräte.

Der Speicherkern von elektrischen Speicherheizgeräten wird auf Temperaturen bis etwa 800°C elektrisch aufgeheizt. Die diesen Speicherheizgeräten zugeordneten Wärmedämmungen bestehen derzeit überwiegend aus faserhaltigem Material. Vor allem von Mikrofasern, die aufgrund ihrer geringen Durchmesser von < 2µm lungengängig sind, gehen erhebliche Gesundheitsprobleme aus; ihnen ordnet man krebserregende Wirkungen zu. Es sind für den Anwendungsbereich Elektro-Speicherheizgeräte aber auch bereits Wärmedämmstoffe bekannt, deren Faserdimensionen außerhalb des lungengängigen Bereichs liegen. Die Beziehung zwischen Faserdimensionen und Lungengängigkeit ist beschrieben in der Zeitschrift "Arbeitsmedizin, Sozialmedizin, Präventivmedizin", Ausgabe Oktober 1990.

Man hat versucht, bei der Wärmedämmung von Elektro-Heizgeräten nur solche Wärmedämmstoffe zu verwenden, deren Faserdimensionen deutlich oberhalb der Stärke bedenklicher Mikrofasern liegen. Aber auch hierbei werden negative Eigenschaften aufgrund von Staub befürchtet, der sich während der Verarbeitung und des Einsatzes des Materials im Wohnraumbereich entwickeln kann und dem ein gesundheitsrelevantes Potential zugeschrieben wird.

Durch geeignete Kapselung der Dämmschichten wurde versucht, das Austreten von gesundheitsschädlichen Stäuben und Fasern zu vermeiden. Bei Beschädigungen der Kapselung der Wärmedämmung, vor allem aufgrund rauher betrieblicher Einsätze, können aber Dämmstoffstäube und -fasern in die Umgebungsatmosphäre austreten.

Es gibt auch bereits moderne Elektro-Speicherheizgeräte mit faserfreien Wärmedämmstoffen, die aus Schäumen oder aus aneinander gebundenen Partikeln bestehen. Derartige faserfreie Wärmedämmungen lassen sich für Elektro-Speicherheizgeräte mit Wärmeleitzahlen von etwa 0,1 W/m x K realisieren. Deshalb ist das Problem des Bauvolumens derartiger faserfreier Wärmedämmstoffe bisher nur unbefriedigend gelöst. Die Wärmeleitzahl von kompakten Wärmedämmungen beispielsweise aus hochdisperser Kieselsäure ist wesentlich niedriger als diejenige faserfreier Wärmedämmstoffe. Außerdem bedingen kompakte Wärmedämmungen aufwendige keramische Vorsinterung oder Zusätze aus Faser- oder Fadenmaterial als Stabilisierungs- oder Versteifungselemente.

Der Erfindung liegt die Aufgabe zugrunde, eine faserfreie Wärmedämmung zur Verfügung zu stellen, deren Verhältnis von Effizienz zu Bauvolumen verbessert ist.

Gelöst wird diese Aufgabe erfindungsgemäß dadurch, daß mehrere dünnwandige, faserfreie Reflektoren in der Richtung des Wärmeflusses hintereinander angeordnet und wenigstens auf ihrer Heißseite mit Reflexionsflächen versehen sind und daß zwischen benachbarten Reflektoren Abstandselemente vorgesehen sind.

Alternativ sieht die Erfindung vor, daß mehrere dünnwandige, faserfreie Reflektoren (15, 16) in der Richtung (3) des Wärmeflusses hintereinander angeordnet und wenigstens auf ihrer Heißseite mit Reflexionsflächen (25) versehen sind.

Die faserfreien Reflektoren, die beispielsweise aus Aluminiumfolie bestehen können, lassen sich sehr dünn auswalzen und können auf engen gegenseitigen Abstand gesetzt werden. Ihre Wärmedämmungseigenschaften in Richtung des Wärmeflusses sind überraschend gut, da die Reflexionsflächen die Wärme von Stufe zu Stufe zurückwerfen. Es entsteht ein Verbundkörper aus mehreren, miteinander verbundenen, dünnen Reflektorschichten mit einer vorzüglichen spezifischen Wärmedämmung im angestrebten Bereich unterhalb von 0,1 W/m x K. Die erfindungsgemäße Wärmedämmung läßt sich daher mit besonderem Vorteil in denjenigen Wänden der Elektro-Speicherheizgeräte einsetzen, die einerseits für die Bautiefe und andererseits für die Bauhöhe maßgeblich sind; dies gilt insbesondere für die Front- und Rückwände sowie für die Deckel von Elektrospeicherheizgeräten.

In besonders vorteilhafter Ausgestaltung sind die Abstandselemente durch einseitige Materialvorsprünge, insbesondere ausgewölbte Noppen gebildet. Alternativ können die Abstandselemente aber auch aus aufgeklebten und/oder eingepreßten Partikeln aus glasartigem oder keramischem Material bestehen, das die für den Einsatzfall notwendige Dauertemperaturbeständigkeit hat. Als Klebstoff eignet sich dabei ein anorganischer, wärmebeständiger Klebstoff, z.B. Wasserglas. So können die als Abstandselemente verwendeten Partikel oder Noppen beispielsweise mit Kaliwasserglas benetzt, mit den Reflektoren zusammengehalten und getrocknet und getempert werden.

Die Wärmedämmung, die nur aus aufeinandergelegten, ondulierten bzw. gewellten Blechen besteht, ist besonders einfach und kostengünstig herstellbar. Eine bevorzugte Ausführungsform ist dadurch gekennzeichnet, daß die Wellen geradlinig verlaufen und die Wellenberge und -täler von zwei benachbarten Reflektoren gekreuzt verlaufen. Auf diese Weise bekommt die Wärmedämmung eine hohe Stabilität.

Ein besonderer Vorteil der Erfindung besteht darin, daß Reflektoren in beliebiger Zahl und Größe mit prinzipiell gleichen Mitteln und im wesentlichen gleichbleibendem Aufwand zu einem Wärmedämmungs-Verbundkörper kombiniert werden können. Die Auswahl der Materialien für die faserfreien Reflektoren kann daher nach der jeweils benötigten Dauertemperaturbeständigkeit und Kostenerwägungen getroffen werden.

Bestimmte, preiswert herstellbare Reflektormaterialien, wie Aluminiumfolie oder auch Folien aus Polyester haben eine begrenzte Temperaturbeständigkeit, die auf der Heißseite der Wärmedämmung, also in unmittelbarer Nachbarschaft des Speicherkerns, u.U. überschritten wird. In Weiterbildung der Erfindung ist daher vorgesehen, daß den dünnwandigen Reflektoren auf der Heißseite eine Platte aus einem faserfreien Wärmedämmstoff, beispielsweise eine Vermiculitplatte, vorgeschaltet ist, und daß Abstandselemente zwischen der Wärmedämmplatte und dem benachbarten Reflektor vorgesehen sind. Die besonders wärmefeste Vermiculitplatte ist so bemessen, daß die Temperatur an ihrer Abstrahlseite niedriger ist als die Dauertemperaturbeständigkeit des anschließenden Reflektors, beispielsweise 650°C für Aluminiumfolienreflektoren. Die restliche Temperaturabnahme wird dann durch die erfindungsgemäße Reflektorkombination auf kurzer Wegstrecke erreicht. Die letzten Reflektorschichten auf der Kaltseite der Wärmedämmungsstruktur können z.B. aus 0,05 mm dicken Polyesterfolien bestehen, deren jeweiligen Heißseiten mit einer Reflexionsschicht, beispielsweise mit aufgedampftem Aluminium versehen sind.

Zweckmäßige Weiterbildungen der Erfindung sind in den Unteransprüchen angegeben.

Im folgenden wird die Erfindung anhand von in der Zeichnung schematisch dargestellten Ausführungsbeispielen näher erläutert. In der Zeichnung zeigen:
- Fig. 1: eine schematische Schnittansicht durch eine neuartige Wärmedämmungsstruktur;
- Fig. 2: eine vergrößerte Teildarstellung entsprechend dem Ausschnitt A in Fig. 1 mit unterschiedlichen Abstandselementen und deren Klebestellen zur Verbindung zweier benachbarter Lagen der Wärmedämmungsstruktur; und
- Fig. 3: eine schematische perspektivische Darstellung einer weiteren erfindungsgemäßen Wärmedämmungsstruktur.

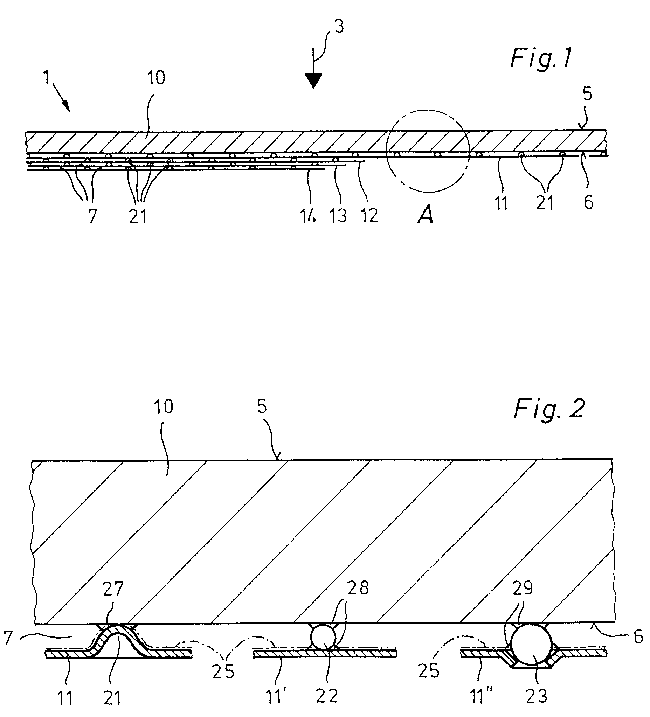

Fig. 1 zeigt schematisch einen Schnitt durch eine Wärmedämmung in Form einer mehrlagigen Verbundstruktur 1. Die Verbundstruktur weist bei dem dargestellten Ausführungsbeispiel eine relativ dicke Platte 10 aus einem herkömmlichen faserfreien Wärmedämmstoff, beispielsweise aus Vermiculit, und mehrere sandwichartig hintereinander angeordnete dünne Reflektorlagen 11, 12, 13 und 14 auf. Die Wärmedämmplatte 10 hat eine relativ hohe Temperaturbeständigkeit, die jedenfalls höher ist als die Abstrahltemperatur des in der Zeichnung nicht dargestellten Speicherkerns. Die Wärmedämmplatte 10 ist daher in der Einbaulage der mehrlagigen Verbundstruktur 1 dem Speicherkern benachbart, während die vergleichsweise dünnen Reflektorlagen 11-14 in Richtung des in Fig. 1 mit dem Pfeil 3 veranschaulichten Wärmeflusses hintereinander und hinter der Platte 10 angeordnet sind. Die in der Regel etwas weniger temperaturbeständigen Reflektoren 11 ... 14 sind daher im Einsatz niedrigeren Temperaturen ausgesetzt als die Heißseite 5 der Wärmedämmplatte 10.

Die in Fig. 1 dargestellten Reflektorlagen 11-14 sind mit Materialvorsprüngen 21 in Form von ausgewölbten Noppen versehen. Diese stehen in punktförmiger Anlage an der jeweils vorhergehenden Wärmedämmschicht, sei es die der Heißseite 5 abgewandte relativ kalte Seite 6 der Wärmedämmplatte 10 oder die entsprechende Seite der jeweils vorhergehenden Reflektorlage 11, 12 oder 13. Die Materialvorsprünge 21 wirken daher im Ergebnis als Abstandshalter, welche die großflächigen und jeweils etwa in einer Ebene angeordneten Reflektorwände 11 ... 14 von der vorgeschalteten Wand auf Abstand halten.

Alle Reflektorlagen 11-14 sind auf ihren jeweiligen Heißseiten (dem Pfeil 3 in Fig. 1 entgegengerichtet) reflektierend ausgebildet, d.h. mit einer Reflexionsfläche 25 versehen, die in Fig. 2 strichpunktiert angedeutet ist. Diese Reflexionsfläche 25 kann entweder als besonderer Belag auf einem dünnwandigen Trägerbauteil ausgebildet sein, oder die reflektierende Fläche kann direkt durch eine Materialoberfläche gebildet sein. Zur Wärmestrahlungsreflexion nutzbare Reflexionseigenschaften haben vor allem bestimmte Metalle oder Metallegierungen, insbesondere gewalztes Aluminium. Aluminiumreflektoren halten der in der Praxis bei Elektro-Speicherheizgeräten auftretenden Temperatur stand, wenn eine relativ dünne Wärmedämmschicht 10 von beispielsweise 6-10 mm auf der Heißseite als Wärmebarriere angeordnet ist. Die Reflektoren 11 ... 14 können bei Ausführung in Aluminium eine Wandstärke von nur ca. 0,1 mm haben. Die Zwischenräume 7, in die die Wärmestrahlung von der Reflexionsschicht 25 zurückgeworfen wird, können so schmal gehalten werden, daß auf der einen Seite die notwendige mechanische Stabilität der gesamten Verbundstruktur 1 und auf der anderen Seite eine gerade noch ausreichende Wärmedämmwirkung erreicht werden.

In Fig. 2 sind neben den ausgewölbten Materialnoppen bzw. - höckern 21 alternative Abstandselemente 22 und 23 gezeigt. Diese bestehen aus Partikeln vorzugsweise sphärischer Form, die die ebene Reflektorwand 11' bzw. 11'' von der Kaltseite 6 der Wärmedämmplatte 10 in geeignetem Abstand halten. Während das Abstandselement 22 zwischen zwei benachbarte parallele Flächen eingefügt und mit diesen verklebt ist, ist das Abstandselement 23 etwas größer und einseitig in die aus Aluminiumfolie bestehende Reflektorwand 11'' eingedrückt.

Die einzelnen Lagen 10 ... 14 der mehrlagigen Verbundstruktur 1 sind bei dem dargestellten Ausführungsbeispiel durch einen anorganischen, wärmebeständigen Klebstoff, z.B. Kaliwasserglas mit den benachbarten Wänden und Flächen verbunden. Die Klebstoffraupen sind in Fig. 2 mit 27, 28, 29 bezeichnet.

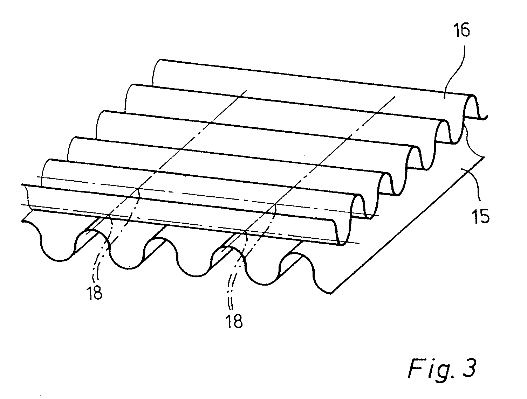

Die Wärmedämmungsstruktur gemäß Fig. 3 besteht aus zwei dünnen Reflektorlagen 15, 16 aus gewelltem Blech. Die Wellenberge der Reflektorlagen liegen aufeinander mit punkt-förmigem Kontakt (Kontaktpunkte 18). Die Verläufe ihrer Wellenberge und -täler sind um etwa 90° gekreuzt. Die Herstellung dieser Wärmedämmungsstruktur ist besonders einfach und leicht automatisierbar, da keine genaue Ausrichtung der Reflektorlagen zueinander nötig ist.

Abwandlungen der beschriebenen Wärmedämmungsstruktur sind im Rahmen des Erfindungsgedankens ohne weiteres möglich. So können beispielsweise die Dicken der Platte 10 bzw. der Reflektorwände den jeweiligen Einsatzverhältnissen angepaßt werden. Es kann eine beliebige Anzahl von Reflektoren 11 ... 14 hintereinander angeordnet werden. Die Korngrößen bzw. wirksamen Längen der Abstandselemente können so abgestimmt werden, daß die Tiefe der Zwischenräume 7 für den gewünschten Wärmedämmungseffekt soeben ausreicht. Gegebenenfalls kann innerhalb der Struktur eine verstärkte Reflektorlage zur Herstellung der gewünschten mechanischen Stabilität eingebaut werden. Ebenso kann die dem Wärmestrom (Pfeil 3, Fig. 1) abgewandte Seite der Reflektorlagen 11 bis 14 und die Seite 6 der Platte 10 mit einer wärmeabsorbierenden Schicht, z.B. einem dunklen Metalloxid oder schwarzem Lack versehen sein.

## Patentansprüche

1. Wärmedämmung für Elektro-Speicherheizgeräte,
**dadurch gekennzeichnet,**
daß mehrere dünnwandige, faserfreie Reflektoren (11 ... 14) in der Richtung (3) des Wärmeflusses hintereinander angeordnet und wenigstens auf ihrer Heißseite mit Reflexionsflächen (25) versehen sind und daß zwischen benachbarten Reflektoren Abstandselemente (21, 22, 23) vorgesehen sind.

2. Wärmedämmung nach Anspruch 1, dadurch gekennzeichnet, daß die Abstandselemente durch einseitige Materialvorsprünge, insbesondere ausgewölbte Noppen (21) gebildet sind.

3. Wärmedämmung nach Anspruch 1 dadurch gekennzeichnet, daß die Abstandselemente aus aufgeklebten und/oder eingepreßten Partikeln (22, 23) aus glasartigem, mineralischem oder keramischem Material bestehen.

4. Wärmedämmung nach Anspruch 3, dadurch gekennzeichnet, daß die Partikel (22, 23) mit einem anorganischen, wärmebeständigen Klebstoff (27, 28, 29), z.B. Wasserglas, aufgeklebt sind.

5. Wärmedämmung für Elektro-Speicherheizgeräte, dadurch gekennzeichnet, daß mehrere dünnwandige, faserfreie Reflektoren (15, 16) in der Richtung (3) des Wärmeflusses hintereinander angeordnet und wenigstens auf ihrer Heißseite mit Reflexionsflächen (25) versehen sind und daß die Reflektoren ondulierte bzw. gewellte Bleche aufweisen, wobei jeweils zwei benachbarte Reflektoren mit ihren Wellenbergen (Kontaktpunkte 18) aufeinanderliegen.

6. Wärmedämmung nach Anspruch 5, dadurch gekennzeichnet, daß die Wellen geradlinig verlaufen und die Wellenberge und -täler von zwei benachbarten Reflektoren (15, 16) gekreuzt verlaufen.

7. Wärmedämmung nach einem der Ansprüche 1 bis 6, dadurch gekennzeichnet, daß die Reflektoren (11 ... 16) im wesentlichen aus einer Metallfolie oder einem Metallblech bestehen.

8. Wärmedämmung nach Anspruch 7, dadurch gekennzeichnet, daß als Reflektor (11 ... 16) eine Aluminiumfolie mit wenigstens einer als Reflexionsfläche (25) dienenden glänzenden Seite vorgesehen ist.

9. Wärmedämmung nach einem der Ansprüche 1 bis 8, dadurch gekennzeichnet, daß der Reflektoranordnung (11 ... 16) auf der Heißseite eine Platte (10) aus einem faserfreien Wärmedämmstoff vorgeschaltet ist und daß Abstandselemente (21, 22, 23) zwischen der Wärmedämmplatte und dem benachbarten Reflektor vorgesehen sind.

10. Wärmedämmung nach Anspruch 9, dadurch gekennzeichnet, daß als Wärmedämmplatte (10) eine Vermiculit- oder Kunstglimmerplatte vorgesehen ist.

11. Wärmedämmung nach Anspruch 9 oder 10, dadurch gekennzeichnet, daß auf der der Wärmedämmplatte (10) abgekehrten Seite der Reflektoranordnung (11 ... 16) wenigstens eine Lage aus relativ hoch temperaturbelastbarem Kunststoff, z.B. aus Polyester, angeordnet ist.

12. Wärmedämmung nach einem der Ansprüche 1 bis 10, dadurch gekennzeichnet, daß alle hintereinander angeordneten Komponenten (10 ... 16) der Wärmedämmung durch Verklebung mit temperaturbeständigen, insbesondere anorganischen Klebern zu einer Baueinheit (1) verbunden sind.

13. Wärmedämmung nach einem der Ansprüche 1 bis 12, dadurch gekennzeichnet, daß die hintereinander angeordneten Komponenten (10 ... 16) punktweise oder am Rande miteinander verbunden sind.

14. Wärmedämmung nach einem der Ansprüche 1 bis 13, dadurch gekennzeichnet, daß mindestens eine der dem Wärmefluß (3) abgewandten Seiten der Komponenten (10 ... 16) mit einer wärmeabsorbierenden Schicht, z.B. einem dunklen Metalloxid oder einem schwarzen Lack, versehen ist.
